# EUROPÄISCHE PATENTSCHRIFT

(11) **EP 3 443 423 B1**
(45) Veröffentlichungstag und Bekanntmachung des Hinweises auf die Patenterteilung: **03.11.2021**
(21) Anmeldenummer: 17725771.4
(22) Anmeldetag: 12.04.2017
(51) Int. Cl.: G08C 17/02, H04W 4/80, H04L 12/28, G05B 19/418

(54) **STEUERADAPTER ZUR BEFESTIGUNG AUF EINEM GERÄT EINES HLK SYSTEMS**
CONTROL ADAPTER FOR FASTENING ON A DEVICE OF A HVAC SYSTEM
ADAPTATEUR DE COMMANDE DESTINÉ À ÊTRE FIXÉ À UN APPAREIL D'UN SYSTÈME DE CHAUFFAGE-VENTILATION-CLIMATISATION

(30) Priorität: 15.04.2016 DE 102016107000; 15.04.2016 DE 202016102006 U
(43) Veröffentlichungstag der Anmeldung: 20.02.2019
(73) Patentinhaber: Belimo Holding AG, 8340 Hinwil (CH)
(72) Erfinder: GROGG, Silvio, 8625 Gossau (CH); STEINER, Marc, 8840 Einsiedeln (CH)
(74) Vertreter: P&TS SA (AG, Ltd.)
(86) Internationale Anmeldenummer: PCT/IB2017/052119
(87) Internationale Veröffentlichungsnummer: WO 2017/178990

(56) Entgegenhaltungen:
- WO-A1-2016/086986
- DE-A1-102006 060 425
- DE-A1-102013 113 258
- DE-U1- 20 206 267

## Beschreibung

### Technisches Gebiet

Die Erfindung bezieht sich auf einen Steueradapter zur Befestigung auf einem Gerät eines Heizungs-, Lüftungs- und/oder Klimasystems (HLK-System), insbesondere im Bereich der Gebäudetechnik.

### Stand der Technik

HLK-Systeme weisen eine Vielzahl von HLK-Geräten, wie Aktuatoren, Sensoren und Steuergeräte, zur Steuerung des HLK-Systems auf. Die Aktuatoren steuern eine Position eines Ventils oder einer Klappe zur Steuerung des Flusses eines Fluids, z. B. Wasser oder Luft, an. Die Sensoren versorgen die Aktuatoren und Steuergeräte mit notwendigen Informationen zur Steuerung des HLK-Systems. Steuergeräte sind mit den Sensoren und Aktuatoren verbunden, um das HLK-System zu steuern. Zum Einstellen und Auslesen von Parametern weisen HLK-Geräte oft drahtlose Nahfeldkommunikationsschnittstellen (NFC) auf. So kann zum Beispiel in einem Aktuator ein Parameter, wie der Maximalwinkel, die Drehgeschwindigkeit, etc., ausgelesen oder eingestellt werden. Da diese HLK-Geräte oft nur schwer zugänglich sind, z.B. in der Decke eines Gebäudes, und ein Benutzer für die Kommunikation mit dem HLK-Gerät sein Bediengerät sehr nahe an die NFC Schnittstelle halten oder ein Kabel mit dem HLK-Gerät verbinden muss, ist eine Parametrisierung des HLK-Geräts für den Benutzer oft mühsam. Vorteilhaft ist bei der Verwendung der Parametrisierung über NFC insbesondere, dass diese auch ohne Bestromung des HLK-Geräts funktioniert, was insbesondere in der Bauphase von Gebäuden wichtig ist. Somit können die HLK-Geräte bereits bei der Montage ohne die Notwendigkeit einer Stromversorgung eingestellt werden.

Ausserhalb des Bereichs der HLK-Systeme ist es aus US20090027189 bekannt, einen Steueradapter für Aktuatoren und Sensoren in Fabriken für die Steuerung des Fabrikationsprozesses zu verwenden. Der Steueradapter kommuniziert mit den Aktuatoren und Sensoren über eine NFC Schnittstelle und über eine drahtlose Kommunikationsschnittstelle mit einer Bedienzentrale. Der Steueradapter analysiert die Daten von dem Aktuator und/oder dem Sensor und leitet diese nur über die drahtlose Kommunikationsschnittstelle, wenn diese wichtig sind. Somit kann die Datenmenge über die drahtlose Kommunikationsschnittstelle reduziert werden. Aufgrund der geringen Datenmengen in HLK-Systeme ist ein solcher Steueradapter für dieses

Anwendungsfeld aber nicht geeignet.

In DE 10 2013 113 258 A1 wird ein Sensor beschrieben zur Flüssigkeits- und/oder Gasanalyse mit einem Messaufnehmer zur Erzeugung eines Messsignals und einem mit dem Messaufnehmer, insbesondere trennbar, verbundenen Kompakttransmitter, welcher zum Empfangen und Weiterverarbeiten des Messsignals ausgestaltet ist, wobei der Kompakttransmitter umfasst:
- ein Transmittergehäuse;
- eine in dem Transmittergehäuse angeordnete Transmitterschaltung;
- eine in dem Transmittergehäuse angeordnete erste Schnittstelle, über welche die Transmitterschaltung mittels eines Anschlusskabels mit einer ersten, insbesondere als übergeordnetes Leitsystem ausgestaltete übergeordneten Datenverarbeitungseinrichtung verbindbar ist; und
- eine in dem Transmittergehäuse angeordnete zweite Schnittstelle, welche die Transmitterschaltung mit einer Antenne verbindet und welche dazu ausgestaltet ist, der Antenne ein Funksignal aufzuprägen oder mittels der Antenne ein Funksignal zu empfangen, dessen Zentralfrequenz eine Wellenlänge λ aufweist; wobei die Antenne ein Abstrahlelement und mindestens ein metallisches Spiegelelement umfasst, und wobei das Abstrahlelement eine Länge von λ/8 bis zu 3λ/8, insbesondere von etwa λ/4, aufweist.

### Darstellung der Erfindung

Es ist ein Ziel der Erfindung, die Bedienung von schwer zugänglichen HLK-Geräten einfacher zu gestalten.

Erfindungsgemäss wird dieses Ziel durch einen Steueradapter erreicht, der auf einem Gerät eines HLK-Systems (HLK-Gerät) oder in dessen Nähe, befestigbar ist. Der Steueradapter kann mit dem HLK-Gerät über eine Nahfeldkommunikationsschnittstelle kommunizieren und mit einer Fernbedienvorrichtung über eine andere drahtlose Kommunikationsschnittstelle kommunizieren.

Dieser Steueradapter hat den Vorteil, dass der Steueradapter nur einmal in der Nähe des HLK-Geräts befestigt werden muss und dann das HLK-Gerät auch aus grösseren Entfernungen parametrisiert werden kann.

Weitere vorteilhafte Ausführungsformen sind in den abhängigen Ansprüchen angegeben.

Erfindungsgemäss weist der Steueradapter ein Gehäuse mit einer ersten Seite, einer der ersten Seite gegenüberliegenden zweiten Seite und einer Ausnehmung auf. Die Ausnehmung erstreckt sich von der ersten Seite bis zur zweite Seite und ist relativ zu der drahtlosen Nahfeldkommunikationsschnittstelle so angeordnet, dass die Ausnehmung zur Ausrichtung der drahtlosen Nahfeldkommunikationsschnittstelle des Steueradapters relativ zu einer drahtlosen Nahfeldkommunikationsschnittstelle des HLK-Geräts geeignet ist. Diese Ausnehmung erlaubt den Steueradapter und die in diesem enthaltene Nahfeldkommunikationsschnittstelle mit der des HLK-Geräts richtig auszurichten, da das HLK-Gerät durch die Ausnehmung sichtbar ist. Somit wird eine Ausrichtungsmarkierung, z.B. ein auf vielen HLK-Geräten dargestelltes Nahfeldkommunikationssymbol, zur Ausrichtung des Steueradapters auf dem HLK-Gerät verwendet.

Vorzugsweise ist eine Antenne der drahtlosen Nahfeldkommunikationsschnittstelle um die Ausnehmung herum angeordnet, vorzugsweise mit einem gemeinsamen Mittelpunkt, so dass bei Ausrichtung der Ausnehmung über einer eine Nahfeldkommunikationsschnittstelle des HLK-Geräts anzeigende Markierung, die drahtlosen Nahfeldkommunikationsschnittstelle des Steueradapter relativ zu der drahtlosen Nahfeldkommunikationsschnittstelle des HLK-Geräts perfekt ausgerichtet ist. Somit kann die richtige Ausrichtung bereits bei der ersten Befestigung sichergestellt werden und die Ausrichtung muss nicht nachjustiert werden, um die Verbindung zu dem HLK-Gerät herzustellen. Vorzugsweise ist die Ausnehmung kreisrund. Dadurch wird eine translatorische Ausrichtung festgelegt ohne eine rotatorische Ausrichtung zu verlangen. Durchmesser der Ausnehmung zwischen 9 und 13 mm ergeben einen optimalen Kompromiss zwischen guter Sichtbarkeit einer Markierung und guter Ausrichtung auf eine Markierung.

In einem Ausführungsbeispiel ist die Ausnehmung mittig zwischen einer dritten Seite und einer vierten Seite des Gehäuses angeordnet. Dadurch kann eine Antenne der drahtlosen Nahfeldkommunikationsschnittstelle die volle breite des Gehäuses ausnutzen und trotzdem mittig um die Ausnehmung angeordnet werden.

In einem Ausführungsbeispiel ist die Ausnehmung näher an einer fünften Seite als an einer sechsten Seite des Gehäuses angeordnet. Dies erlaubt, die Antenne der drahtlosen Nahfeldkommunikationsschnittstelle ebenfalls bis zur fünften Seite erstrecken zu lassen und an der sechsten Seite die notwendigen elektronische Komponenten, Anschlüsse und Schalter anzuordnen.

In einem Ausführungsbeispiel ist die drahtlose Kommunikationsschnittstelle eine Bluetoothschnittstelle, eine WLAN-Schnittstelle oder eine andere Kommunikationsschnittstelle mit einer grösseren Reichweite als die drahtlose Nahfeldkommunikationsschnittstelle. Diese sind in vielen Fernbedienungsvorrichtungen wie Smartphones, Tablet und tragbare Computer vorhanden und eignen sich somit besonders gut.

In einem Ausführungsbeispiel weist die erste Seite einen Befestigungsmechanismus zum entfernbaren Befestigen des Steueradapters auf dem HLK-Gerät auf. Dies kann einen Ansaugmechanismus oder eine magnetische Oberfläche sein. Dies erlaubt, den Steueradapter nach einem Einsatz wieder zu entfernen. So könnten die Steueradapter von einem Wartungsteam verwendet werden, das die Steueradapter nur während einer Wartung auf dem HLK-Gerät verwendet. Allerdings können die Steueradapter auch fest und nicht entfernbar auf den HLK-Geräten befestigt werden, um eine kontinuierliche Fernbedienung der HLK-Geräte zu gewährleisten.

In einem Ausführungsbeispiel weist der Steueradapter einen Anschluss für eine Kabelverbindung mit dem HLK-Gerät auf, wobei die Steuerschaltung ausgebildet ist, in einem ersten Betriebsmodus die von der drahtlosen Kommunikationsschnittstelle empfangenen Steuersignale in Steuersignale der drahtlosen Nahfeldkommunikationsschnittstelle zu konvertieren und über die drahtlose Nahfeldkommunikationsschnittstelle an den HLK-Gerät zu senden, und die von der drahtlosen Nahfeldkommunikationsschnittstelle empfangenen Steuersignale in Steuersignale der drahtlosen Kommunikationsschnittstelle zu konvertieren und über die drahtlose Kommunikationsschnittstelle an die Fernbedienungsvorrichtung zu senden, und in einem zweiten Betriebsmodus die von der drahtlosen Kommunikationsschnittstelle empfangenen Steuersignale in Steuersignale des Anschluss für die Kabelverbindung zu konvertieren und über den Anschluss für die Kabelverbindung an den HLK-Gerät zu senden, und die an dem Anschluss für die Kabelverbindung empfangenen Steuersignale in Steuersignale der drahtlosen Kommunikationsschnittstelle zu konvertieren und über die drahtlose Kommunikationsschnittstelle an die Fernbedienungsvorrichtung zu senden.

In einem Ausführungsbeispiel ist die Steuerschaltung ausgebildet, über die drahtloses Nahfeldkommunikationsschnittstelle Initialisierungsinformationen an die Fernbedienungsvorrichtung zu schicken, mit denen die Fernbedienungsvorrichtung die Kommunikation über die drahtloses Kommunikationsschnittstelle initialisieren kann. Somit lässt sich die Verbindung zwischen dem Steueradapter und der Fernbedienungsvorrichtung ohne manuelle Konfigurationen initialisieren. Da für die Übermittlung der Initialisierungsinformationen die drahtlose Nahfeldkommunikationsschnittstelle verwendet wird, muss keine zusätzliche Hardware in dem Steueradapter vorgesehen werden. Dieses Ausführungsbeispiel ist auch ohne die oben beschriebene Ausnehmung möglich.

In einem Ausführungsbeispiel ist die drahtlose Nahfeldkommunikationsschnittstelle so in dem Steueradapter angeordnet, dass eine Kommunikation mit einer externen Nahfeldkommunikationsschnittstelle auf der ersten Seite und auf der zweiten Seite des Gehäuses möglich ist. Somit kann die die drahtlose Nahfeldkommunikationsschnittstelle auch im montierten Zustand verwendet werden, um mit anderen Geräten, wie z.B. der Fernbedienungsvorrichtung, zu kommunizieren.

### Kurze Beschreibung der Figuren

Die Erfindung wird anhand der beigefügten Figuren näher erläutert, wobei zeigen
- Fig. 1: eine schematische Ansicht des Steuersystems mit einem Aktuator für HLK-Systeme und mit einem Steueradapter.
- Fig. 2: eine Draufsicht auf ein Ausführungsbeispiel eines Steueradapters.
- Fig. 3: eine Seitenansicht auf das Ausführungsbeispiel des Steueradapters aus Fig. 2.
- **Fig. 4**: eine Draufsicht auf das Ausführungsbeispiel des Steueradapters aus Fig. 2 ohne Gehäusedeckel.
- **Fig. 5**: eine Seitenansicht des Ausführungsbeispiel des Steueradapters aus Fig. 2 montiert auf einem Aktuator für HLK-Systeme.
- **Fig. 6**: eine schematische Ansicht des Steuersystems mit einem Aktuator für HLK-Systeme und mit einem Steueradapter in einem zweiten Betriebsmodus.

### Wege zur Ausführung der Erfindung

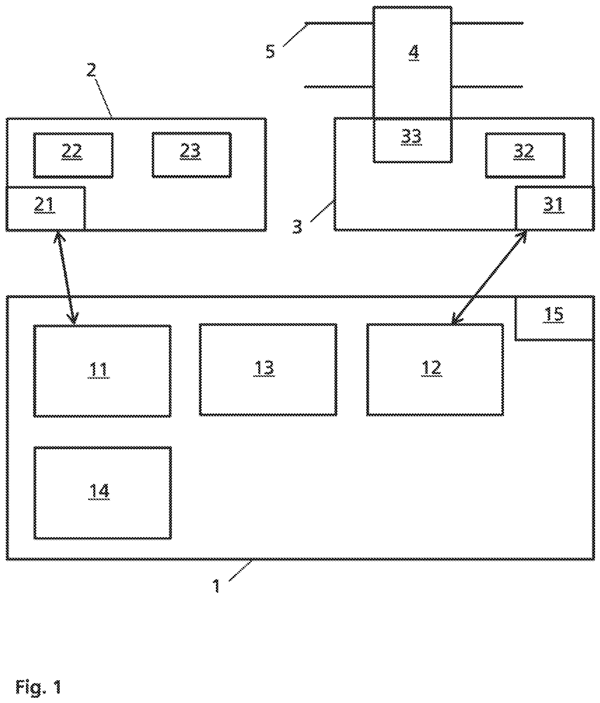

Fig. 1 zeigt schematisch ein Ausführungsbeispiel eines Steuersystems für HLK-Systeme insbesondere im Bereich der Gebäudetechnik. Das Steuersystem weist einen Steueradapter 1, eine Fernbedienungsvorrichtung 2, einen Aktuator 3 als HLK-Gerät und einen Fluidkontrollmechanismus 4 auf. Das Ausführungsbeispiel wird mit einem Aktuator 3 als HLK-Gerät beschrieben, wobei die Erfindung auch auf andere HLK-Geräte, wie zum Beispiel Sensoren und Steuergeräte Anwendung finden kann und alle Offenbarungen bezüglich des Aktuators 3 analog auf andere HLK-Geräte Anwendung finden.

HLK-Systeme regeln in Gebäuden, Räumen oder anderen Umgebungen einen oder mehrere Parameter der Umgebungsluft, wie zum Beispiel Temperatur, Luftfeuchtigkeit, Luftzusammensetzung. Dies wird durch Luftaustausch, Luftfilterung, Wärmetauscher, etc. erreicht. Ein wichtiger Bestandteil von HLK-Systemen sind Fluidkontrollmechanismen 4, wie z.B. Ventile oder Klappen, zur Steuerung einer Durchflussmenge eines Fluids durch eine Fluidleitung, einen Fluideingang oder einen Fluidausgang 5. Als Fluid werden sowohl Flüssigkeiten (in der Regel Wasser) wie Gase (in der Regel Luft) verwendet. Zur Durchflussmengensteuerung können die Fluidkontrollmechanismen 4 in der Regel viele Positionen zwischen einer offenen und einer geschlossenen Position in der Fluidleitung 5 einnehmen.

Der Aktuator 3 wandelt einen elektrischen Steuerbefehl in eine mechanische Position des Fluidkontrollmechanismus 4 um. Dazu weist der Aktuator 3 eine drahtlose Nahfeldkommunikationsschnittstelle 31, eine Steuerschaltung 32 und ein Stellglied 33 auf.

Die drahtlose Nahfeldkommunikationsschnittstelle 31 ist zur Kommunikation von Steuersignalen ausgebildet. Vorzugsweise ist die drahtlose Nahfeldkommunikationsschnittstelle 31 passiv ausgebildet, d.h. als Transponder ausgebildet, so dass ein aktives Lesegerät auch mit dem Aktuator 3 kommunizieren kann, wenn dieser nicht mit Strom versorgt ist. Allerdings wäre es auch möglich die drahtlose Nahfeldkommunikationsschnittstelle 31 aktiv auszubilden. Vorzugsweise handelt es sich bei der drahtlosen Nahfeldkommunikationsschnittstelle 31 um eine Schnittstelle nach dem Standard ISO18092 und/oder ISO 14443 und/oder ISO 15693. Beispielsweise kommuniziert die drahtlose Nahfeldkommunikationsschnittstelle 12 mit einer Trägerfrequenz von 13,56 MHz.

Die an der drahtlosen Nahfeldkommunikationsschnittstelle 31 ausgetauschten Steuersignale sind ausgebildet, bestimmte Parameter des Aktuators 3 einzustellen oder auszulesen. Vorzugsweise werden Stellsignale zur Ansteuerung der mechanischen Stellung des Aktuators 3 nicht über die drahtlose Nahfeldkommunikationsschnittstelle 31 kommuniziert, sondern über eine weitere Schnittstelle, z.B. eine Datenbusleitung. Eine mechanische Stellung des Aktuators 3 soll hierin die aktuelle mechanische Position des Aktuators 3 sein, welche die mechanische Stellung/Position des von dem Aktuator 3 angesteuerten Fluidkontrollmechanismen 4 bestimmt. Ein Parameter hingegen ist eine (elektronisch) speicherbare Einstellung des Aktuators 3, die keine Veränderung der mechanischen Stellung des Aktuators 3 bedarf, z.B. die Minimal- und/oder Maximalstellung des Aktuators 3, dessen Drehgeschwindigkeit, etc.. Vorzugsweise unterscheidet sich ein Parameter von einer mechanischen Stellung insbesondere dadurch, dass der Parameter über die drahtlose Nahfeldkommunikationsschnittstelle 31 verändert werden kann, ohne dass der Aktuator 3 mit Strom versorgt ist, während für die Änderung der mechanischen Stellung eine Stromversorgung des Aktuators 3 notwendig ist. Dies wird dadurch erreicht, dass das aktive Lesegerät des Steueradapters 1 den Transponder 31 mit dem notwendigen Strom versorgt, um den gewünschten Parameter zu ändern oder auszulesen. In einem alternativen Ausführungsbeispiel ist es aber auch möglich, dass die über die drahtlose Nahfeldkommunikationsschnittstelle 31 ausgetauschten Steuersignale auch die Stellsignale zur Änderung und zum Auslesen der mechanischen Stellung des Aktuators 3 enthalten. In einem Betriebszustand der drahtlose Nahfeldkommunikationsschnittstelle 31 funktioniert diese als Data-Iog-Schnittstelle und überträgt alle relevanten Daten, wie Zustandsdaten, Umgebungsdaten, Sensordaten, Parameterdaten, etc., an die Fernbedienungsvorrichtung 2, die diese Daten weiter auf einen Cloudspeicher leitet. Es ist ebenfalls möglich, über die drahtlose Nahfeldkommunikationsschnittstelle 31 ein Software-/Firmwareupdate des HLK-Geräts durchzuführen.

Die Steuerschaltung 32 steuert das Stellglied 33 auf der Basis von empfangenen Stellsignalen.

Das Stellglied 33 wandelt von der Steuerschaltung 32 empfangene elektrische Stellsignale in eine Position des Stellglieds 33 um. Das Stellglied 33 ist vorzugsweise ein Motor, z.B. ein Stellmotor. Es können aber auch andere Stellglieder 33, wie zum Beispiel ein Piezoaktuator, verwendet werden. Das Stellglied 33 ist mit dem Fluidkontrollmechanismus 4 verbunden, so dass über die Position des Stellglieds 33 die Position des Fluidkontrollmechanismus 4 geregelt werden kann.

Der Steueradapter 1 ist ausgebildet Steuersignale zwischen der Fernbedienungsvorrichtung 2 und dem Aktuator 3 auszutauschen. Der Steueradapter 1 weist eine drahtlose Kommunikationsschnittstelle 11, eine drahtlosen Nahfeldkommunikationsschnittstelle 12, eine Steuerschaltung 13, eine Energieversorgung 14 und einen Anschluss 15 auf.

Die drahtlose Nahfeldkommunikationsschnittstelle 12 ist zur Kommunikation der Steuersignale zwischen dem Steueradapter 2 und dem Aktuator 3 ausgebildet. Vorzugsweise ist die drahtlose Nahefeldkommunikationsschnittstelle 12 aktiv, d.h. ein aktives Lesegerät, so dass das Steueradapters 1 Parameter des Aktuators 3 auch ohne Stromversorgung des Aktuators 3 einstellen und auslesen kann. Dies ist insbesondere in der Bauphase von Projekten vorteilhaft, in denen die Aktuatoren 3 zwar bereits montiert, aber noch nicht mit der Stromversorgung verbunden sind. Somit lassen sich diese Aktuatoren 3 in dieser frühen Phase bereits ohne Stromversorgung einstellen. Darüber hinaus ist die drahtlose Nahfeldkommunikationsschnittstelle 12 zur Übertragung der bezüglich der drahtlosen Nahfeldkommunikationsschnittstelle 31 genannten Daten ausgebildet. Die Reichweite der drahtlosen Nahfeldkommunikationsschnittstelle 12 ist kleiner als die der drahtlosen Kommunikationsschnittstelle 11. Vorzugsweise handelt es sich bei der drahtlosen Nahfeldkommunikationsschnittstelle 12 um eine Schnittstelle nach dem Standard ISO18092 und/oder ISO 14443. Vorzugsweise kommuniziert die drahtlose Nahfeldkommunikationsschnittstelle 12 mit einer Trägerfrequenz von 13,56 MHz.

Die drahtlose Kommunikationsschnittstelle 11 ist zur Kommunikation von Steuersignalen zwischen der Fernbedienungsvorrichtung 2 und dem Steueradapter 1 ausgebildet.

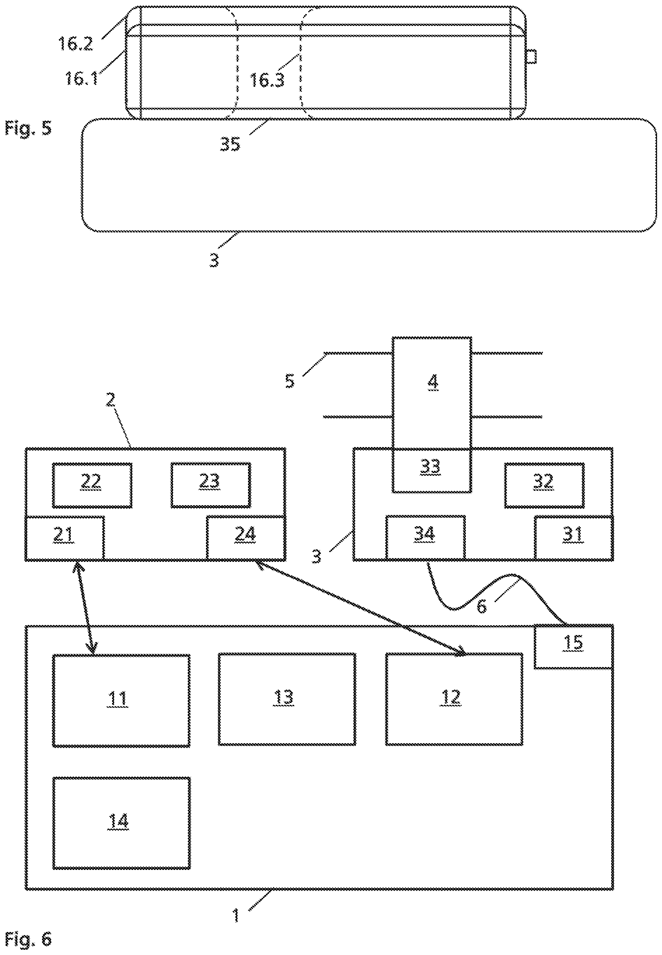

Der optionale Anschluss 15 kann eine alternative Kommunikationsmöglichkeit mit einem Aktuator darstellen, der keine drahtlose Nahfeldkommunikationsschnittstelle hat. In diesem Fall werden die Steuersignale zwischen dem Aktuator und dem Steueradapter 1 über eine Kabelverbindung ausgetauscht. Fig. 6 zeigt eine solche Kabelverbindung zwischen dem Aktuator 3 und dem Steueradapter 1. Der Anschluss 15 könnte für ein Bus-Kabel bestimmt sein, welcher über ein Bus-Kabel mit dem Aktuator 3 verbunden wird. Der Anschluss 15 könnte auch in einem anderen Ausführungsbeispiel ein USB-Anschluss sein.

Die Steuerschaltung 13 ist zum Konvertieren der von der drahtlosen Kommunikationsschnittstelle 11 empfangenen Steuersignale in Steuersignale der drahtlosen Nahfeldkommunikationsschnittstelle 12 und zum Konvertieren der von der drahtlosen Nahfeldkommunikationsschnittstelle 12 empfangenen Steuersignale in Steuersignale der drahtlosen Kommunikationsschnittstelle 11 ausgebildet. Vorzugsweise liest die Steuerschaltung 13 die digitalen Informationen aus den empfangenen analogen Steuersignalen aus und generiert neue analoge Steuersignale für die jeweils andere Schnittstelle mit den gleichen oder entsprechenden digitalen Informationen. Allerdings ist es auch möglich, dass die Steuerschaltung 13 analog ist.

Die Steuerschaltung 13 ist in einem Ausführungsbeispiel ausgebildet in einem ersten Betriebsmodus wie oben beschrieben über die drahtlose Nahfeldkommunikationsschnittstelle 12 mit dem Aktuator 3 zu kommunizieren (siehe Fig. 1) und in einem zweiten Betriebsmodus die von der drahtlosen Kommunikationsschnittstelle 11 empfangenen Steuersignale in Steuersignale des Anschlusses 15 für die Kabelverbindung 6 zu konvertieren und über den Anschluss für die Kabelverbindung 6 an den Aktuator 3 zu senden, und die an dem Anschluss 15 für die Kabelverbindung 6 empfangenen Steuersignale in Steuersignale der drahtlosen Kommunikationsschnittstelle 11 zu konvertieren und über die drahtlose Kommunikationsschnittstelle 11 an die Fernbedienungsvorrichtung 2 zu senden (siehe Fig. 6).

In einem weiteren alternativen Ausführungsbeispiel könnte der Anschluss 15 auch die Nahfeldkommunikationsschnittstelle 12 ersetzen, wobei dann die Steuerschaltung 13 nur in dem zweiten Betriebsmodus operiert.

Die Energieversorgung 14 versorgt die elektronischen Komponenten des Steueradapters 1 mit der notwendigen Spannung. Die Energieversorgung 14 ist vorzugsweise eine Batterie. Die Batterie kann eine Einwegbatterie oder eine wieder aufladbare Batterie wie zum Beispiel eine Lithium-Ionen-Batterie sein. Alternativ oder zusätzlich kann die Energieversorgung 14 einen Anschluss für ein Kabel aufweisen. Der Anschluss ist vorzugsweise ein USB-Anschluss (z.B. Micro-USB). Der Anschluss kann vorzugsweise mit dem Aktuator 3 verbunden werden. Dies hat den Vorteil, dass der Steueradapter 1 von dem Aktuator 3 versorgt wird und somit keine separate Stromversorgung benötigt. Der Anschluss der Energieversorgung 14 kann der Anschluss 15 sein, so dass über den Anschluss 15 sowohl Daten als auch Energie übertragen wird. Alternativ sind andere Energieversorgungen 14 möglich.

Vorzugsweise weist der Steueradapter 1 LED-Signalisierungen auf, die bestimmte Betriebszustände anzeigen. So könnte eine LED eine bestehende Verbindung der drahtlosen Nahfeldkommunikationsschnittstelle 12 mit dem Aktuator 3 anzeigen und/oder eine LED eine bestehende Verbindung der drahtlosen Kommunikationsschnittstelle 11 mit der Fernbedienungsvorrichtung 2 anzeigen.

Die Fernbedienungsvorrichtung 2 ist zum Austauschen von Steuersignalen mit dem Aktuator 3 insbesondere zum Eingeben von Steuerbefehlen an den Aktuator 3 und zum Auslesen von Steuerparametern aus dem Aktuator 3 ausgebildet. Vorzugsweise ist die Fernbedienungsvorrichtung 2 ein Tablet oder ein Smartphone mit einer App für die Bedienung des Aktuators. Alternativ kann die Fernbedienungsvorrichtung 2 auch ein tragbarer Computer sein mit einem entsprechenden Bedienprogram. Andere Fernbedienungsvorrichtungen 2 sind auch denkbar, wie zum Beispiel das Belimo (eingetragene Marke) Tool. Die Fernbedienungsvorrichtung 2 weist eine drahtlose Kommunikationsschnittstelle 2, eine Steuerschaltung 22 und eine Benutzerschnittstelle 23 auf.

Die drahtlose Kommunikationsschnittstelle 21 ist zur Kommunikation der Steuersignale zwischen der Fernbedienungsvorrichtung 2 und dem Steueradapter 1 ausgebildet.

Die Benutzerschnittstelle 23 ist zum Steuern des Aktuators 3, insbesondere zum Eingeben von Steuerbefehlen und zum Auslesen von Steuerparametern, ausgebildet. Vorzugsweise ist die Benutzerschnittstelle ein Touchscreen. Allerdings sind andere Benutzerschnittstellen möglich.

Die Steuerschaltung 22 verbindet die Benutzerschnittstelle 23 und die drahtlose Kommunikationsschnittstelle 21. Die Steuerschaltung 22 stellt vorzugsweise über die drahtlose Kommunikationsschnittstelle 21 empfangene Parameter auf der Benutzerschnittstelle 23 dar und sendet an der Benutzerschnittstelle 23 eingegebene Steuerbefehle über die drahtlose Kommunikationsschnittstelle 21 an den Steueradapter 2.

Vorzugsweise weist die Fernbedienungsvorrichtung eine Verbindung zum Internet auf, über welche Daten von dem Aktuator 3 auf einem Cloudspeicher abgelegt werden können.

Die drahtlose Kommunikationsschnittstelle 21 und die drahtlose Kommunikationsschnittstelle 11 sind vorzugsweise eine BluetoothSchnittstelle (registrierte Marke), welche dem Industriestandard IEEE 802.15.1 entspricht. Alternativ kann die drahtlose Kommunikationsschnittstelle 21 und die drahtlose Kommunikationsschnittstelle 11 eine WLAN-Schnittstelle sein, welche dem Industriestandard IEEE 802.11 entspricht. Andere drahtlose Kommunikationsschnittstellen 11 bzw. 21 sind aber auch möglich.

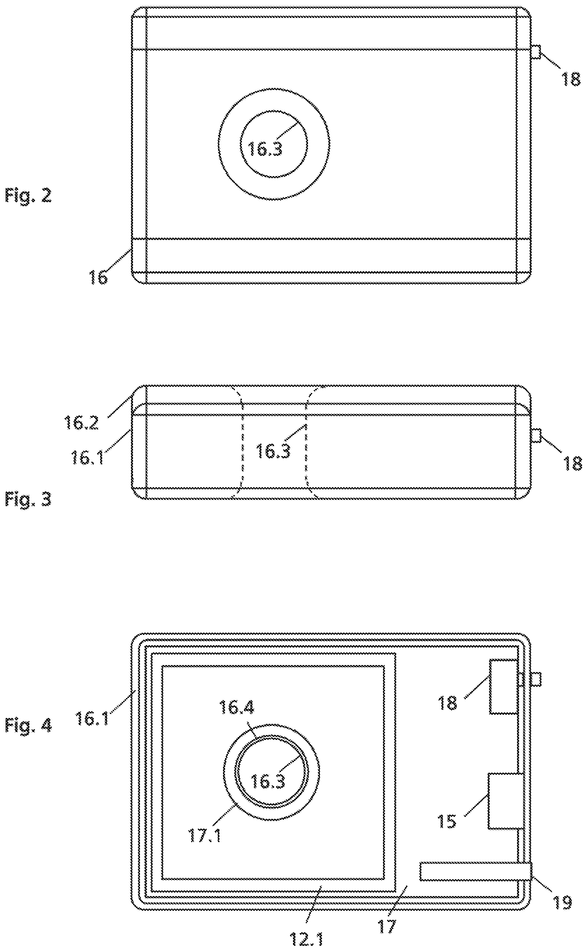

Fig. 2 bis 4 zeigen ein Ausführungsbeispiel des Steueradapters 1. Der Steueradapter 1 weist vorzugsweise ein Gehäuse 16 mit einer ersten Seite und einer der ersten Seite gegenüberliegenden (vorzugsweise parallelen) Seite auf. Vorzugsweise ist das Gehäuse 16 grundsätzlich rechteckig mit einer rechtwinkelig zu der ersten und der zweiten Seite angeordneten dritten Seite, vierten Seite, fünften Seite und sechsten Seite, wobei die dritte Seite gegenüber der vierten Seite (vorzugsweise parallel) angeordnet und die fünfte Seite gegenüber der sechsten Seite (vorzugsweise parallel) angeordnet ist. Grundsätzlich rechteckig soll hierbei auch ergonomische Rechtecke umfassen, wie Rechtecke mit abgerundeten und/oder abgeschrägten Ecken wie in dem Ausführungsbeispiel in Fig. 2 bis 5 zu sehen. Die erste und die zweite Seite bilden die beiden grössten Seitenflächen auf. Vorzugsweise ist der Steueradapter 6 bis 7 cm, vorzugsweise 6,5 cm, lang (Länge der ersten und zweiten Seite) und 4 bis 5 cm, vorzugsweise 4,5 cm, breit (Breite der ersten und zweiten Seite) und 1 bis 2 cm dick (Breite der dritten bis sechsten Seite).

Eine Ausnehmung 16.3 erstreckt sich von der ersten bis zur zweiten Seite des Gehäuses 16. Diese durchgehende Ausnehmung 16.3 erlaubt bei der Ausrichtung des Steueradapters 1 auf dem Aktuator 3 den Aktuator 3 durch die Ausnehmung zu sehen. Das heisst, die Ausnehmung 16.3 erlaubt durch den Steueradapter 1 hindurchzusehen. Die Ausnehmung 16.3 ist relativ zu einer Antenne der drahtlosen Nahfeldkommunikationsschnittstelle 11 so angeordnet, um mit der Ausnehmung 16.3 die richtige Positionierung bzw. Ausrichtung des Steueradapters 1 auf dem Aktuator 3 für eine optimale Verbindung zu ermöglichen. Dabei wird die Tatsache ausgenutzt, dass die optimale Position für eine Nahfeldkommunikation auf vielen Aktuatoren 3 mit einem Nahfeldkommunikationsmarkierung 35 (siehe Fig. 5) markiert ist. Da diese Markierung bei der Positionierung des Steueradapters 1 von diesem aber verdeckt wird, wird eine optimale Positionierung eines Nahfeldkommunikationsgeräts im Stand der Technik erschwert. Durch die Ausnehmung 16.3 wird die Markierung auf dem Aktuator 3 bei optimaler Ausrichtung des Steueradapters 1 sichtbar. Vorzugsweise ist die Antenne um die Ausnehmung 16.3 herum angeordnet, so dass in der Ausnehmung 16.3 eine Verbindung für eine Nahfeldkommunikation besteht. Vorzugsweise ist der Mittelpunkt der Ausnehmung 16.3 in dem Mittelpunkt der Antenne angeordnet.

Die Ausnehmung 16.3 ist vorzugsweise kreisrund und erstreckt sich mit deren Längsachse rechtwinkelig zu der ersten und/oder zweiten Seite und/oder parallel zu der dritten, vierten, fünften und/oder sechsten Seite. Vorzugsweise hat die Ausnehmung einen Durchmesser von 0,5 bis 1,5 cm, insbesondere von 1,1 cm. Allerdings sind andere Formen der Ausnehmung 16.3 möglich. Die Ausnehmung 16.3 ist in der Mitte zwischen der dritten und vierten Seite angeordnet. Die Ausnehmung ist etwas in Richtung der fünften Seite verschoben. Dadurch ist auf der sechsten Seite neben der Antenne noch genügend Platz für elektrische Komponenten und/oder Anschlüsse. Als Anschlüsse sind auf der sechsten Seite zum Beispiel ein Stromschalter 18 angeordnet, der die elektrischen Komponenten je nach Schaltzustand mit der Energieversorgung 14 verbindet oder von dieser trennt, um den Steueradapter 1 ein- oder auszuschalten. Zusätzlich ist der bereits beschriebene Anschluss 15 an der sechsten Seite angeordnet (siehe Fig. 4). Ein weiterer Anschluss an der sechsten Seite ist ein Lichtleiter 19. Allerdings könnten die Anschlüsse, Schalter oder Komponenten auch anders angeordnet sein.

Das Gehäuse 16 ist aus einer Gehäuseschale 16.1 auf der ersten Seite und einem Gehäusedeckel 16.2 auf der zweiten Seite ausgebildet. Fig. 4 zeigt die Gehäuseschale 16.1 von der zweite Seite aus ohne Gehäusedeckel 16.2. Dies erlaubt eine Leiterplatte 17 mit den elektronischen Komponenten des Steueradapters 1 in der Gehäuseschale 16.1 zu montieren und das Gehäuse 16 mit dem Gehäusedeckel 16.2 zu verschliessen. Die Leiterplatte 17 ist vorzugsweise parallel zu der ersten und/oder zweiten Seite angeordnet. Jede andere Ausführungsform des Gehäuses 16 ist möglich.

Die Leiterplatte 17 weist eine um die Ausnehmung 16.3 umlaufende Leiterbahn 12.1 auf, welche die Antenne der drahtlosen Nahfeldkommunikationsschnittstelle 12 ausbildet. Die Leiterbahn 12.1 kann einen geschlossenen Kreis mit einer gemeinsamen Zuführung oder eine offenen Kreis mit getrennten Zuführungen für die Kreisenden ausbilden. Die Leiterbahn 12.1 ist hier rechteckig oder quadratisch ausgeführt, wobei andere Formen, wie kreisförmig, auch möglich sind. In dem Ausführungsbeispiel wird die ganze Breite des Steueradapters 1 genutzt, um die Antenne 12.1 auszubilden. Dazu wird die Leiterplatte 17 über die ganze Breite (und über die ganze Länge) des Steueradapters 1 bzw. des Gehäuses 16 angeordnet. Die Leiterbahn 12.1 läuft entlang der Kanten der dritten vierten und fünften Seite der Leiterplatte 17 (Seitennummerierung entsprechend den Gehäuseseiten). Die Leiterbahn 12.1 ist hier grundsätzlich quadratisch ausgebildet mit einer Seitenlänge von 4 cm. Die Leiterplatte 17 weist eine Ausnehmung 17.1 auf, durch welche die Wandungen 16.4 des Gehäuses 16 verlaufen, welche die Ausnehmung 16.3 ausbilden.

Fig. 5 zeigt den Steueradapter 1 mit der ersten Seite auf dem Aktuator 3 befestigt. Zur Befestigung werden vorzugsweise wiederverwendbare Befestigungsmittel verwendet. Dies kann zum Beispiel eine Saugnapffolie, eine Klebefolie, die durch Van der Waals Kräfte haftet, oder eine Magnetfolie auf der ersten Seite des Steueradapters 1 sein. Alternativ könnte der Steueradapter 1 mit einem Schnappmechanismus des Steueradapters 1 und/oder des Aktuators 3 auf dem Aktuator 3 befestigt werden. Allerdings sind auch andere Befestigungsmöglichkeiten, wie Schrauben, Nieten, Kleben, etc. möglich.

Fig. 6 zeigt neben dem bereits beschriebenen zweiten Betriebsmodus des Steueradapters 1 bzw. dessen Steuerschaltung 13 einen weiteren dritten Betriebsmodus. In dem dritten Betriebsmodus wird über die drahtlose Nahfeldkommunikationsschnittstelle 12 Initialisierungsinformationen an die Fernbedienungsvorrichtung 2 geschickt, mit denen die Fernbedienungsvorrichtung 2 die Kommunikation über die drahtlose Kommunikationsschnittstelle 11 initialisieren kann. Wenn die Fernbedienungsvorrichtung 2, die dafür ebenfalls eine drahtlose Nahfeldkommunikationsschnittstelle 24 aufweisen muss, in die Nähe des Steueradapters 1 gehalten wird, empfängt diese die Initialisierungsinformationen des Steueradapters 1 und die Steuerschaltung 22 der Fernbedienungsvorrichtung 2 kann die Parameter der drahtlosen Kommunikationsschnittstelle 21 so einstellen, dass diese mit der drahtlosen Kommunikationsschnittstelle 11 des Steueradapters 1 kommunizieren kann.

Der dritte Betriebsmodus ist insbesondere in Kombination mit dem zweiten Betriebsmodus vorteilhaft, da dann die drahtlose Nahfeldkommunikationsschnittstelle 12 nicht für die Kommunikation mit dem Aktuator 3 benötigt wird. So könnte der zweite und dritte Betriebsmodus detektiert werden, wenn an dem Anschluss 15 ein Aktuator 3 detektiert wird. Allerdings kann die Übertragung der Initialisierungsinformationen über die drahtlose Nahfeldkommunikationsschnittstelle 12 auch über andere Mechanismen, z.B. einen Schalter, eine Detektion der Art des mit der drahtlosen nahfeldkommunikationsschnittstelle 12 verbundenen Geräts realisiert werden. So wäre es auch denkbar, die drahtlose Nahfeldkommunikationsschnittstelle 12 zuerst für die Initialisierung der Kommunikation mit der Fernbedienungsvorrichtung 2 zu verwenden (dritter Betriebsmodus) und dann für die Kommunikation mit dem Aktuator 3 (erster Betriebsmodus).

Die Erfindung ist nicht auf die beschriebenen Ausführungsbeispiele beschränkt.

## Patentansprüche

1. Steueradapter zur Befestigung auf einem HLK-Gerät (3) aufweisend
eine drahtlose Kommunikationsschnittstelle (11) zur Kommunikation von Steuersignalen zwischen einer Fernbedienungsvorrichtung (2) und dem Steueradapter (1);
eine drahtlose Nahfeldkommunikationsschnittstelle (12) zur Kommunikation von Steuersignalen zwischen dem Steueradapter (1) und dem HLK-Gerät (3);
eine Steuerschaltung (13) zum Konvertieren der von der drahtlosen Kommunikationsschnittstelle (11) empfangenen Steuersignale in Steuersignale der drahtlosen Nahfeldkommunikationsschnittstelle (12) und zum Konvertieren der von der drahtlosen Nahfeldkommunikationsschnittstelle (12) empfangenen Steuersignale in Steuersignale der drahtlosen Kommunikationsschnittstelle (11);
ein Gehäuse (16) mit einer ersten Seite, einer der ersten Seite gegenüberliegenden zweiten Seite und einer Ausnehmung (16.3), die sich von der ersten Seite bis zur zweiten Seite erstreckt und die relativ zu der drahtlosen Nahfeldkommunikationsschnittstelle (12) so angeordnet ist, dass die Ausnehmung (16.3) zur Ausrichtung der drahtlosen Nahfeldkommunikationsschnittstelle (12) des Steueradapters (2) relativ zu einer drahtlosen Nahfeldkommunikationsschnittstelle (31) des HLK-Geräts (3) geeignet ist, **dadurch gekennzeichnet, dass**
die Ausnehmung (16.3) durchgehend ist und so ausgebildet ist, dass eine Nahfeldkommunikationsmarkierung (35) auf dem HLK-Gerät (3) bei der Ausrichtung des Steueradapters (1) auf dem HLK-Gerät (3) durch die Ausnehmung (16.3) sichtbar ist.

2. Steueradapter nach Anspruch 1, wobei eine Antenne der drahtlosen Nahfeldkommunikationsschnittstelle (12) um die Ausnehmung (16.3) herum angeordnet ist.

3. Steueradapter nach Anspruch 2, wobei die Antenne als eine um die Ausnehmung (16.3) herumgeführte Leiterbahn (12.1) einer Leiterplatte (17) ausgeführt ist.

4. Steueradapter nach einem der Ansprüche 2 bis 3, wobei der Mittelpunkt der Antenne mit dem Mittelpunkt der Ausnehmung (16.3) übereinstimmt.

5. Steueradapter nach einem der Ansprüche 1 bis 4, wobei die Ausnehmung (16.3) kreisrund ist.

6. Steueradapter nach einem der Ansprüche 1 bis 5, wobei die Längsachse der Ausnehmung (16.3) sich rechtwinkelig zu der ersten Seite und/oder der zweiten Seite erstreckt.

7. Steueradapter nach einem der Ansprüche 1 bis 6, aufweisend eine Leiterplatte (17), die die drahtlose Kommunikationsschnittstelle (11), die drahtlose Nahfeldkommunikationsschnittstelle (12), die Steuerschaltung (13) und weitere elektrische Elemente (15, 18, 19) des Steueradapters (1) aufweist, wobei die Leiterplatte (17) parallel zu der ersten Seite und/oder zweiten Seite des Gehäuses (16) angeordnet ist und eine Ausnehmung (17.1) aufweist, durch welche die Ausnehmung (16.3) des Gehäuses (16) ausbildende Wandungen (16.4) des Gehäuses (16) geführt sind.

8. Steueradapter nach einem der Ansprüche 1 bis 7, wobei die drahtlose Kommunikationsschnittstelle (11) eine Bluetoothschnittstelle oder eine WLAN-Schnittstelle ist.

9. Steueradapter nach einem der Ansprüche 1 bis 8, wobei die Steuerschaltung (13) ausgebildet ist,
Steuerdaten aus den an der drahtlosen Kommunikationsschnittstelle (11) empfangenen Steuersignalen auszulesen und ein Steuersignal der drahtlosen Nahfeldkommunikationsschnittstelle (12) mit den ausgelesenen Steuerdaten zu generieren, und
Steuerdaten aus den an der drahtlosen Nahfeldkommunikationsschnittstelle (12) empfangenen Steuersignalen auszulesen, ein Steuersignal der drahtlosen Kommunikationsschnittstelle (11) mit den ausgelesenen Steuerdaten zu generieren.

10. Steueradapter nach einem der Ansprüche 1 bis 9, wobei die Steuerschaltung (13) ausgebildet ist, über die drahtlose Nahfeldkommunikationsschnittstelle (12) Initialisierungsinformationen an die Fernbedienungsvorrichtung (2) zu schicken, mit denen die Fernbedienungsvorrichtung (2) die Kommunikation über die drahtlose Kommunikationsschnittstelle (11) initialisieren kann.

11. Steueradapter nach einem der Ansprüche 1 bis 10, wobei die drahtlose Nahfeldkommunikationsschnittstelle (11) so in dem Steueradapter (1) angeordnet ist, dass eine Kommunikation mit einer externen Nahfeldkommunikationsschnittstelle (24, 31) auf der ersten Seite und auf der zweiten Seite des Gehäuses (16) möglich ist.

12. Steuersystem aufweisend ein HLK-Gerät (3) und einen Steueradapter (1) nach einem der vorigen Ansprüche.

13. Steuersystem nach dem vorigen Anspruch, wobei das HLK-Gerät (3) auf der dem Steueradapter (1) zugewandten Seite eine Markierung aufweist, die bei richtiger Positionierung des Steueradapters (1) durch die Ausnehmung sichtbar ist.

14. Steuersystem nach Anspruch 12 oder 13 weiter aufweisend eine Fernbedienungsvorrichtung (2) aufweisend eine drahtlose Kommunikationsschnittstelle (21), die zur Kommunikation der Steuersignale mit der drahtlosen Kommunikationsschnittstelle (11) des Steueradapters (1) ausgebildet ist, eine Benutzerschnittstelle (23) mit einem Touchscreen und einer Steuerschaltung (22) zur Steuerung der Benutzerschnittstelle (23) und der drahtlosen Kommunikationsschnittstelle (21).

## Claims

1. Control adapter for fastening on an HVAC device (3), having
a wireless communication interface (11) for communicating control signals between a remote-control device (2) and the control adapter (1);
a wireless near-field communication interface (12) for communicating control signals between the control adapter (1) and the HVAC device (3);
a control circuit (13) for converting the control signals received from the wireless communication interface (11) into control signals of the wireless near-field communication interface (12) and for converting the control signals received from the wireless near-field communication interface (12) into control signals of the wireless communication interface (11);
a housing (16) having a first side, a second side lying opposite the first side, and an opening (16.3) which extends from the first side to the second side and which is arranged relative to the wireless near-field communication interface (12) in such a way that the opening (16.3) is suitable for aligning the wireless near-field communication interface (12) of the control adapter (2) relative to a wireless near-field communication interface (31) of the HVAC device (3), **characterized in that**
the opening (16.3) is a thru-opening and is designed in such a way that, when the control adapter (1) is aligned on the HVAC device (3), a near-field communication mark (35) on the HVAC device (3) is visible through the opening (16.3).

2. Control adapter according to Claim 1, wherein an antenna of the wireless near-field communication interface (12) is arranged around the opening (16.3).

3. Control adapter according to Claim 2, wherein the antenna is embodied as a conductor track (12.1), made to extend around the opening (16.3), of a printed circuit board (17).

4. Control adapter according to one of Claims 2 to 3, wherein the centre point of the antenna coincides with the centre point of the opening (16.3).

5. Control adapter according to one of Claims 1 to 4, wherein the opening (16.3) is circular.

6. Control adapter according to one of Claims 1 to 5, wherein the longitudinal axis of the opening (16.3) extends perpendicular to the first side and/or the second side.

7. Control adapter according to one of Claims 1 to 6, having a printed circuit board (17) which has the wireless communication interface (11), the wireless near-field communication interface (12), the control circuit (13) and further electrical elements (15, 18, 19) of the control adapter (1), wherein the printed circuit board (17) is arranged parallel with respect to the first side and/or second side of the housing (16) and has an opening (17.1) through which walls (16.4) of the housing (16), forming the opening (16.3) of the housing (16), are guided.

8. Control adapter according to one of Claims 1 to 7, wherein the wireless communication interface (11) is a Bluetooth interface or a WLAN interface.

9. Control adapter according to one of Claims 1 to 8, wherein the control circuit (13) is designed
to read out control data from the control signals received at the wireless communication interface (11) and to generate a control signal of the wireless near-field communication interface (12) with the read-out control data, and
to read out control data from the control signals received at the wireless near-field communication interface (12) and to generate a control signal of the wireless communication interface (11) with the read-out control data.

10. Control adapter according to one of Claims 1 to 9, wherein the control circuit (13) is designed to send initialization information to the remote-control device (2) via the wireless near-field communication interface (12), with which initialization information the remote-control device (2) can initialize the communication via the wireless communication interface (11).

11. Control adapter according to one of Claims 1 to 10, wherein the wireless near-field communication interface (11) is arranged in the control adapter (1) in such a way that communication with an external near-field communication interface (24, 31) on the first side and on the second side of the housing (16) is possible.

12. Control system having an HVAC device (3) and a control adapter (1) according to one of the preceding claims.

13. Control system according to the preceding claim, wherein the HVAC device (3) has, on the side facing the control adapter (1), a mark which, when the control adapter (1) is correctly positioned, is visible through the opening.

14. Control system according to Claim 12 or 13, also having a remote-control device (2) having a wireless communication interface (21) which is designed to communicate the control signals to the wireless communication interface (11) of the control adapter (1), a user interface (23) with a touch screen and a control circuit (22) for controlling the user interface (23) and the wireless communication interface (21).

## Revendications

1. Adaptateur de commande destiné à être fixé sur un appareil de CVC (3), comprenant
une interface de communication sans fil (11) servant à la communication de signaux de commande entre un dispositif de commande à distance (2) et l'adaptateur de commande (1) ;
une interface de communication en champ proche sans fil (12) servant à la communication de signaux de commande entre l'adaptateur de commande (1) et l'appareil de CVC (3) ;
un circuit de commande (13) destiné à convertir les signaux de commande reçus par l'interface de communication sans fil (11) en signaux de commande de l'interface de communication en champ proche sans fil (12) et à convertir les signaux de commande reçus par l'interface de communication en champ proche sans fil (12) en signaux de commande de l'interface de communication sans fil (11) ;
un boîtier (16) comportant un premier côté, un deuxième côté en vis-à-vis du premier côté et une cavité (16.3) qui s'étend du premier côté au deuxième côté et qui est disposée par rapport à l'interface de communication en champ proche sans fil (12) de telle sorte que la cavité (16.3) est adaptée pour l'orientation de l'interface de communication en champ proche sans fil (12) de l'adaptateur de commande (2) par rapport à une interface de communication en champ proche sans fil (31) de l'appareil de CVC (3),
**caractérisé en ce que**
la cavité (16.3) est continue et configurée de telle sorte qu'un marquage de communication en champ proche sans fil (35) sur l'appareil de CVC (3) est visible à travers la cavité (16.3) sur l'appareil de CVC (3) lors de l'orientation de l'adaptateur de commande (1).

2. Adaptateur de commande selon la revendication 1, une antenne de l'interface de communication en champ proche sans fil (12) étant disposée autour de la cavité (16.3).

3. Adaptateur de commande selon la revendication 2, l'antenne étant réalisée sous la forme d'une piste conductrice (12.1) d'un circuit imprimé (17) qui est acheminée autour de la cavité (16.3).

4. Adaptateur de commande selon l'une des revendications 2 et 3, le point central de l'antenne coïncidant avec le point central de la cavité (16.3).

5. Adaptateur de commande selon l'une des revendications 1 à 4, la cavité (16.3) étant circulaire.

6. Adaptateur de commande selon l'une des revendications 1 à 5, l'axe longitudinal de la cavité (16.3) s'étendant perpendiculairement au premier côté et/ou au deuxième côté.

7. Adaptateur de commande selon l'une des revendications 1 à 6, comprenant un circuit imprimé (17), lequel comporte l'interface de communication sans fil (11), l'interface de communication en champ proche sans fil (12), le circuit de commande (13) et des éléments électriques (15, 18, 19) supplémentaires de l'adaptateur de commande (1), le circuit imprimé (17) étant disposé parallèlement au premier côté et/ou au deuxième côté du boîtier (16) et comportant une cavité (17.1) à travers laquelle passent des parois (16.4) du boîtier (16) formant la cavité (16.3) du boîtier (16).

8. Adaptateur de commande selon l'une des revendications 1 à 7, l'interface de communication sans fil (11) étant une interface Bluetooth ou une interface WLAN.

9. Adaptateur de commande selon l'une des revendications 1 à 8, le circuit de commande (13) étant configuré pour,
lire des données de commande à partir des signaux de commande reçus au niveau de l'interface de communication sans fil (11) et générer un signal de commande de l'interface de communication en champ proche sans fil (12) avec les données de commande lues, et
lire des données de commande à partir des signaux de commande reçus au niveau de l'interface de communication en champ proche sans fil (12) et générer un signal de commande de l'interface de communication sans fil (11) avec les données de commande lues.

10. Adaptateur de commande selon l'une des revendications 1 à 9, le circuit de commande (13) étant configuré pour envoyer, par le biais de l'interface de communication en champ proche sans fil (12), des informations d'initialisation au dispositif d'opération à distance (2), avec lesquelles le dispositif d'opération à distance (2) peut être initialisé par le biais de l'interface de communication sans fil (11).

11. Adaptateur de commande selon l'une des revendications 1 à 10, l'interface de communication en champ proche sans fil (11) étant disposée dans l'adaptateur de commande (1) de telle sorte qu'une communication avec une interface de communication en champ proche externe (24, 31) est possible sur le premier côté et sur le deuxième côté du boîtier (16).

12. Système de commande comportant un appareil de CVC (3) et un adaptateur de commande (1) selon l'une des revendications précédentes.

13. Système de commande selon la revendication précédente, l'appareil de CVC (3) possédant, sur le côté qui fait face à l'adaptateur de commande (1), un marquage qui est visible à travers la cavité lors d'un positionnement correct de l'adaptateur de commande (1).

14. Système de commande selon la revendication 12 ou 13, comprenant en outre un dispositif de commande à distance (2) qui possède une interface de communication sans fil (21), laquelle est configurée pour la communication des signaux de commande avec l'interface de communication sans fil (11) de l'adaptateur de commande (1), une interface utilisateur (23) pourvue d'un écran tactile et un circuit de commande (22) destiné à commander l'interface utilisateur (23) et l'interface de communication sans fil (21).
